# NEUE EUROPÄISCHE PATENTSCHRIFT

(11) **EP 0 641 679 B2**
(45) Veröffentlichungstag und Bekanntmachung des Hinweises auf die Entscheidung über den Einspruch: **30.08.2000**
(45) Hinweis auf die Patenterteilung: 17.12.1997
(21) Anmeldenummer: 94111957.0
(22) Anmeldetag: 01.08.1994
(51) Int. Cl.: B60C 23/08

(54) **Vorrichtung zur Überwachung des Luftdrucks eines Reifens bei Kraftfahrzeugen mit einem Sensor**
Apparatus for monitoring the tyre pressure of a vehicle comprising a sensor
Dispositif de surveillance de pression du pneumatique d'un véhicule avec un palpeur

(30) Priorität: 02.09.1993 DE 4329591
(43) Veröffentlichungstag der Anmeldung: 08.03.1995
(73) Patentinhaber: Bayerische Motoren Werke Aktiengesellschaft, 80788 München (DE)
(72) Erfinder: Ellmann, Manfred, D-84172 Buch am Erlbach (DE); Hein, Hans-Rudolf, D-82194 Gröbenzell (DE)

(56) Entgegenhaltungen:
- EP-A- 0 545 641
- EP-A- 0 656 269
- WO-A-87/04124
- DE-A- 2 528 352
- DE-A- 3 242 291
- DE-C- 2 713 451
- DE-C- 3 016 337
- FR-A- 2 121 283
- FR-A- 2 580 997
- US-A- 3 973 436
- US-A- 4 180 794
- US-A- 4 862 486

## Beschreibung

Die Erfindung betrifft eine Vorrichtung zur Überwachung des Luftdrucks eines Reifens bei Kraftfahrzeugen mit einem Sensor, der ein der Verformung des Reifens entsprechendes Signal abgibt, und mit einer Auswerteeinheit, die das Signal des Sensors erfaßt.

Eine derartige Vorrichtung zur Überwachung des Reifenluftdrucks ist beispielsweise aus der DE 39 16 176 A1 bekannt. Bei der bekannten Vorrichtung ist als Auswerteeinheit ein Abstandsmeßgerät an der Felge eines Fahrzeugreifens befestigt. Dieses Abstandsmeßgerät enthält einen Sender zur Abgabe von Laserstrahlen auf die wie ein Diffusor-Reflektor wirkende Reifeninnenseite des Laufstreifens des Reifens. Die von der Reifeninnenseite reflektierten Laserstrahlen werden von einem Empfänger, der hier als Sensor zur Abgabe eines der Verformung des Reifens entsprechenden Signals wirkt, aufgenommen. Die Abweichung der Richtungen der reflektierten Strahlungen voneinander werden als Meßwert für das Ausmaß der radialen Reifeneindrückung, die von dem Reifenluftdruck abhängt, vom Abstandsmeßgerät ausgewertet.

Aus der EP 0 197 813 B1 ist eine Vorrichtung zur Überwachung des Luftdrucks eines Reifens bekannt, bei dem die Eindrückung des Reifens aufgrund der Reflexion von ausgesendeten Schallwellen ermittelt wird.

Bei den bekannten Vorrichtungen zur Überwachung des Luftdrucks eines Reifens bei Kraftfahrzeugen ist die Ermittlung der Verformung des Reifens über die Reflexion von Strahlen oder Schallwellen äußerst aufwendig und kostenintensiv.

Weiterhin sind auch aus den Druckschriften WO-A-87/04124 und FR-A-2580997 Vorrichtungen zur Überwachung des Luftdrucks eines Reifens bei Kraftfahrzeugen bekannt. Diese beiden Druckschriften beziehen sich auf einen Sensor zur Überwachung des Luftdrucks eines Reifens bei Kraftfahrzeugen, durch den lediglich eine bestimmte abnorme Verformung des Reifens aufgrund eines abnehmenden Luftdrucks erkannt werden soll. Hierzu wird bei beiden Druckschriften überprüft, ob das die Verformung wiedergebende Signal oberhalb oder unterhalb eines Schwellwertes liegt. Die WO-A-87/04124 bezieht sich dabei im speziellen auf die besondere Ausgestaltung des Sensors, um eine Temperaturkompensation des Sensorsignals zu erreichen. Die FR-A-2580997 offenbart zwar bereits ein Piezoelement als Sensor zur Erfassung der Verformung des Reifens, dabei steht jedoch nicht die Auswertung des Sensorsignals sondern die Ausgestaltung des Sensors im Vordergrund. Aus den Druckschritten WO-A-87/04124 und FR-A-2580997 ist demnach lediglich eine qualitative, nicht aber eine genaue quantitative Erfassung der Verformung des Reifens bekannt.

Es ist Aufgabe der Erfindung, eine Vorrichtung zur Überwachung des Luftdrucks eines Reifens bei Kraftfahrzeugen zu schaffen, bei der zum einen ein einfach gebauter Sensor verwendet wird und zum anderen eine einfache aber genaue Auswertung der Verformung des Reifens möglich ist.

Diese Aufgabe wird durch die Merkmale des Anspruchs 1 gelöst. Hierbei wird ein Sensor, insbesondere ein Biege- bzw. Dehnungssensor, zur Messung der Verformung eines Reifens bei einem Latschdurchlauf derart ausgebildet, daß er ein dem Ausmaß dieser Verformung entsprechenden elektrischen Impuls abgibt. Vorzugsweise wird die Verformung der Reifenseitenwand bei einem Latschdurchlauf gemessen. Die Auswertung eines elektrischen Impulses, z. B. durch Messung seiner Amplitude, seiner Dauer oder der Frequenz, mit der dieser Impuls wiederholt auftritt, erfordert einen wesentlich geringeren Aufwand in der Auswerteeinheit als die Auswertung reflektierter optischer Strahlen oder Schallwellen, die erst in ein auswertbares elektrisches Signal aufbereitet werden müssen. Mit der erfindungsgemäßen Vorrichtung wird demnach eine einfachere und schnellere Erfassung der Verformung eines Reifens ermöglicht.

Die Auswerteeinheit könnte lediglich die Höhe der Amplitude des elektrischen Impulses auswerten, um das Ausmaß der Verformung zu ermitteln. Dies ist eine besonders einfache Möglichkeit zur Ermittlung der Verformung des Reifens, wenn keine hohe Genauigkeitsanforderung besteht. Dabei wird jedoch der Einfluß der Fahrzeuggeschwindigkeit auf die Verformung des Reifens vernachläßigt.

Erfindungsgemäß wird vorgesehen, daß die Auswerteeinheit das Verhältnis der Dauer des elektrischen Impulses zur Dauer einer Radumdrehung ermittelt und aus diesem Verhältnis das Ausmaß der Verformung bestimmt. Dies ist eine genauere Vorgehensweise, um die Verformung des Reifens, beispielsweise auch in Abhängigkeit von der Fahrzeuggeschwindigkeit, festzustellen.

Eine weitere vorteilhafte Ausgestaltung der Erfindung ist der Gegenstand des Patentanspruchs 2. Hierin wird vorgesehen, daß pro Radumdrehung nur ein elektrischer Impuls abgegeben wird. Demnach muß lediglich ein Sensor pro Rad angebracht sein.

Eine weitere vorteilhafte Ausgestaltung der Erfindung ist der Gegenstand des Patentanspruchs 3. Darin wird vorgesehen, daß über die gesamte Betriebsdauer eines Reifens die Anzahl der Impulse erfaßt wird. Hierzu kann beispielsweise ein Zähler im Reifen oder in der Auswerteeinheit vorgesehen sein, der nur beim Wechsel eines Reifens rücksetzbar ist. Mit der Erfassung der Anzahl der Impulse über die gesamte Betriebszeit eines Reifens kann dessen Laufleistung ausgerechnet und sein Verschleiß abgeschätzt werden. Dies ist beispielsweise sinnvoll, um eine Weiter- oder Wiederverwendung eines Reifens zu entscheiden.

Eine weitere vorteilhafte Ausgestaltung der Erfindung ist der Gegenstand des Patentanspruchs 4. Darin ist vorzusehen, den Sensor direkt an oder in einer Zone des Reifens anzubringen, die beim Latschdurchlauf, vorzugsweise möglichst stark, verformt wird; z.B. an oder in einer Seitenwand des Reifens. Diese direkte Verbindung zwischen Sensor und Meßort ermöglicht eine genaue Erfassung der Verformung an diesem Meßort.

Eine weitere vorteilhafte Ausgestaltung der Erfindung ist der Gegenstand des Patentanspruchs 5. Als Sensor wird vorzugsweise ein Piezoelement vorgesehen. Dies ist eine besonders einfache Sensorvorrichtung, um ein aus der Reifenverformung resultierendes Biegeereignis passiv zu erfassen.

Eine weitere vorteilhafte Ausgestaltung der Erfindung ist der Gegenstand des Patentanspruchs 6. Der vom Sensor abgegebene elektrische Impuls wird drahtlos an die Auswerteeinheit übermittelt. Durch die ortsfeste Anordnung der Auswerteeinheit außerhalb des Reifens, muß lediglich der Sensor und ein Sender zur drahtlosen Übermittlung im Reifen selbst angebracht sein. Die Störanfälligkeit der Auswerteeinheit wird durch die ortsfeste Anordnung außerhalb des Reifens reduziert und nur die kostengünstigen Bauteile werden in den Reifen integriert.

Eine weitere vorteilhafte Ausgestaltung der Erfindung ist der Gegenstand des Patentanspruchs 7. Der Sensor ist direkt mit einem Sender zur drahtlosen Übertragung des Impulses verbunden. Der Sensor und der Sender sind damit als integriertes Bauteil platzsparend am oder im Reifen anbringbar.

Eine weitere vorteilhafte Ausgestaltung der Erfindung ist der Gegenstand des Patentanspruchs 8. Darin wird vorgesehen, daß das Piezoelement nicht nur als Sensor, sondern auch zur elektrischen Versorgung des Senders eingesetzt wird. Dazu kann beispielsweise ein elektrischer Speicher mit dem Piezoelement verbunden sein, der bei jedem Biegevorgang oder bei einer bestimmten Anzahl von Biegevorgängen durch die freigesetzten Elektronen des Piezoelements aufgeladen wird.

In der Zeichnung sind Ausführungsbeispiele der Erfindung dargestellt. Es zeigt
- Fig. 1: schematisch die von einem erfindungsgemäßen Sensor abgegebenen elektrischen Impulse und
- Fig. 2: eine Sensorschaltanordnung mit einem Piezoelement.

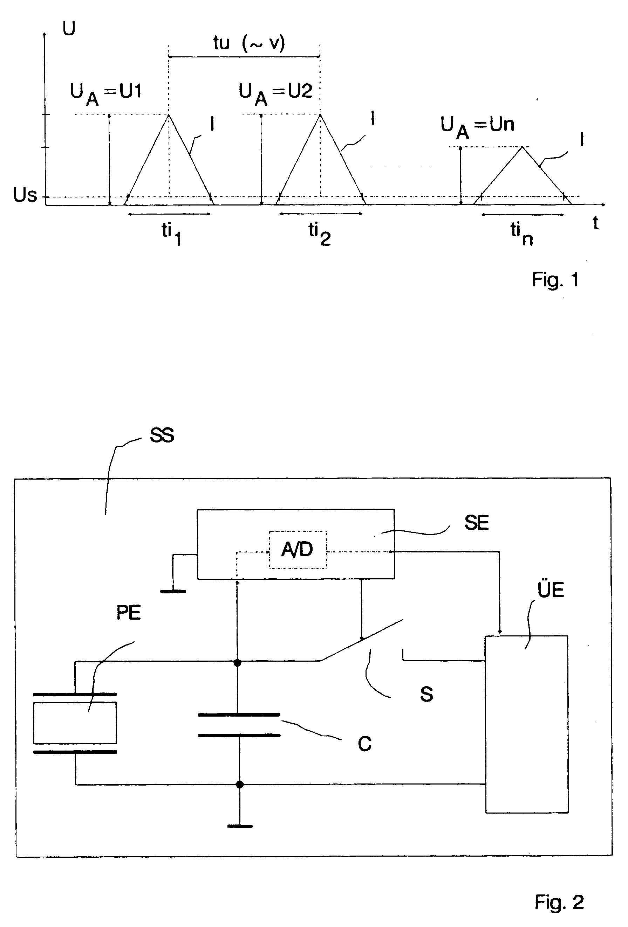

In Fig. 1 ist schematisch eine Folge von elektrischen Impulsen I, die von einem hier nicht abgebildeten Sensor abgegeben werden, dargestellt. In der Darstellung ist auf der Abszisse die Zeit t und auf der Ordinate die Amplitude in Form einer Spannung U aufgetragen. In diesem Beispiel wird pro Radumdrehung ein Impuls erzeugt. Die Zeit zwischen zwei Impulsen I bzw. die Zeit einer Radumdrehung ist die Dauer tu, die von der Fahrzeuggeschwindigkeit v abhängt. Jeder elektrische Impuls ist im wesentlichen durch seine Maximalamplitude U_{A} und seine Dauer ti (ti₁, ti₂,... tiₙ) definiert. Die Dauer ti ist beispielsweise durch die Zeit t vorgegeben, innerhalb derer der Impuls I eine Amplitude U aufweist, die größer als eine Spannungsschwelle U_{S} ist. Die Form eines elektrischen Impulses I entsprechend der Verformung des Reifens pro Radumdrehung ist im wesentlichen durch eine zunächst bis zur Maximalamplitude U_{A} mit einer endlichen Steilheit ansteigende und mit derselben Steigung wieder abfallende Flanke charakterisiert.

Zum einen kann der Luftdruck eines Reifens ausschließlich in Abhängigkeit von der Maximalamplitude U_{A} eines elektrischen Impulses I bestimmt werden. Dazu sind beispielsweise Tabellen in der Auswerteeinheit vorgesehen, die jeder möglichen Maximalamplitude U_{A} (U1, U2...Un) eine entsprechende Verformung des Reifens und dieser wiederum einen entsprechenden Luftdruck des Reifens zuordnen. Soll der Luftdruck des Reifens sehr genau bestimmt werden, reicht die bloße Auswertung der Amplitude nicht aus, da sich die Amplitude nicht nur in Abhängigkeit des Luftdrucks, sondern auch beispielsweise in Abhängigkeit der Fahrzeuggeschwindigkeit und/oder der Fahrzeugbeladung ändert. Daher kann die Zuordnung des Luftdrucks zu einer Amplitude U_{A} auch z.B. in Abhängigkeit der Fahrzeuggeschwindigkeit v und/oder der Fahrzeugbeladung vorgenommen werden. Beispielsweise können für verschiedene Fahrzeuggeschwindigkeitsbereiche unterschiedliche Amplituden-Luftdruck-Zuordnungstabellen vorgesehen sein. Jedoch kann der Luftdruck auch gleichzeitig in Abhängigkeit von der maximalen Amplitude U_{A} der elektrischen Impulse I und in Abhängigkeit von der Dauer tu einer Radumdrehung, die der Fahrzeuggeschwindigkeit v proportional ist, bestimmt werden. Dies ist beispielsweise ebenfalls in Form von Tabellen oder in Form von Kennlinien, Kennfeldern oder mathematischen Formeln möglich.

Eine besonders genaue Größe zur Bestimmung des Luftdruckes durch Auswertung des elektrischen Impulses entsprechend der Verformung des Reifens ist das Verhältnis der Dauer tu einer Radumdrehung zu der Dauer ti eines Im-pulses I. Die Dauer ti eines elektrischen Impulses I ist insbesondere bei gleichbleibender Fahrzeuggeschwindigkeit v umso größer, je niedriger der Luftdruck im Reifen ist, da sich bei umso niedrigerem Luftdruck der Reifen umso stärker verformt. Dieser Zusammenhang und der Einfluß der Fahrzeuggeschwindigkeit v auf die Dauer tᵢ des Impulses I werden in der Bildung des Verhältnisses der Dauer tu zu der Dauer ti berücksichtigt. Beispielsweise wird bei gleichbleibender Dauer tu, d. h. bei gleichbleibender Fahrzeuggeschwindigkeit v, bei größer werdender Dauer ti festgestellt, daß der Reifenluftdruck abnimmt.

Die Zuordnung einer Amplitude, wahlweise auch in Verbindung mit der Fahrzeuggeschwindigkeit v oder der Dauer tᵤ einer Radumdrehung, zu einem bestimmten Wert eines Reifenluftdruckes und/oder auch die Zuordnung des Verhältnisses der Dauer tu zu der Dauer ti zu einem bestimmten Wert eines Reifenluftdruckes wird üblicherweise empirisch ermittelt und in Form von Tabellen oder Kennfeldern in der Auswerteeinheit abgespeichert.

In Fig. 2 ist eine Sensorschaltanordnung SS dargestellt, die beispielsweise in der Seitenwand eines Reifens integriert ist. Die Sensorschaltanordnung SS enthält ein Piezoelement PE als Sensor, eine Steuereinheit SE mit einem Analog/Digital-Wandler A/D, eine Übertragungseinheit ÜE als Sender, einen steuerbaren Schalter S und einen Kondensator C als elektrischen Speicher. Der der Übertragungseinheit ÜE zugeordnete Empfänger sei in einer hier nicht dargestellten Auswerteeinheit, die ortsfest mit dem Kraftfahrzeug verbunden ist, zugeordnet. Signale zwischen der Übertragungseinheit ÜE und dem Empfänger der Auswerteeinheit werden drahtlos übermittelt.

Der Sensor PE als Piezoelement ist dem Kondensator C als elektrischen Speicher parallelgeschaltet. Der Sensor PE ist mit einem Eingang der Steuereinheit SE verbunden. Ein erster Ausgang der Steuereinheit SE führt zu dem steuerbaren Schalter S. Ein zweiter Ausgang der Steuereinheit SE ist mit der Übertragungseinheit ÜE verbunden. Der steuerbare Schalter S ist zwischen dem Kondensator C und der Übertragungseinheit ÜE angeordnet.

Das Piezoelement PE erzeugt bei jeder Umdrehung einen elektrischen Impuls I, der über den Eingang der Steuereinheit SE an einen A/D-Wandler geführt wird. Der analog-digital gewandelte elektrische Spannungsimpuls wird z.B. in Form eines Codes am zweiten Ausgang des Steuergerätes an die Übertragungseinheit ÜE weitergegeben. Wird die Übertragungseinheit ÜE mit Spannung versorgt, wird der elektrische Impuls I z.B. in Form eines digitalen Codes an den Empfänger der Auswerteeinheit übertragen. Zur elektrischen Versorgung der Übertragungseinheit ÜE dient der Kondensator C, wenn der steuerbare Schalter S geschlossen ist. Der Kondensator C wird über die von dem Piezoelement PE abgegebenen Ladungen aufgeladen, wobei die Steuereinheit SE beispielsweise über die Anzahl der bereits abgegebenen Impulse I die Spannung des Kondensators C ermittelt und über den ersten Ausgang den Steuerschalter S schließt, wenn die geladene Spannung des Kondensators C einen Mindestspannungswert erreicht hat. Solange eine ausreichende Spannung vom Kondensator C zur Versorgung der Übertragungseinheit ÜE vorhanden ist, wird jeder elektrische Impuls I, der von dem Piezoelement PE bei jeder Radumdrehung abgegeben wird, vorzugsweise in digitaler Form von der Übertragungseinheit ÜE an die Auswerteeinheit übermittelt. Es ist jedoch auch möglich, den elektrischen Impuls I, der vom Piezoelement PE abgegeben wird, von der Übertragungseinheit ÜE analog an die Auswerteeinheit zu übermitteln. Die Übertragung in digitaler Form ist aber erfahrungsgemäß genauer und sicherer als in analoger Form.

Es ist jedoch auch möglich, den von dem Piezoelement PE abgegebenen, direkt der Verformung des Reifens entsprechenden Impuls I in der Steuereinheit SE in einen rechteckförmigen Impuls, dessen Amplitude der Maximalamplitude des ursprünglichen Impulses entspricht, umzuformen. Somit wäre eine Übertragung in analoger Form weniger störanfällig und eine Analog-Digital-Wandlung könnte eingespart werden.

Die Verwendung eines Piezoelementes PE gleichzeitig als Sensor und als Energiequelle des Kondensators C zur Versorgung der Übertragungseinheit ÜE erspart eine zusätzliche Spannungsversorgung, die entweder extern über ein Kabel oder über eine weitere Übertragungseinheit übermittelt oder in Form einer Batterie in die Sensorschaltanordnung integriert werden müßte. Es ist erfindungsgemäß jedoch auch möglich, ein Piezoelement allein zur elektrischen Versorgung des Senders, der Steuereinheit und/oder des Sensors einzusetzen und z.B. ein zusätzliches Piezoelement, einen Dehnungsmeßstreifen oder ein Thermoelement als Sensor vorzusehen.

## Patentansprüche

1. Vorrichtung zur Überwachung des Luftdrucks eines Reifens bei Kraftfahrzeugen mit einem Sensor, der ein der Verformung des Reifens entsprechendes Signal abgibt, und mit einer Auswerteeinheit, die das Signal des Sensors erfaßt, wobei der Sensor derart ausgebildet ist, daß er einen dem Ausmaß der Verformung eines Reifens bei einem Latschdurchlauf entsprechenden elektrischen Impuls abgibt, dadurch gekennzeichnet, daß die Auswerteeinheit in Abhängigkeit von dem Verhältnis der Dauer (ti₁, ti₂, tiₙ) des Impulses (I) zur Dauer (tᵤ) einer Radumdrehung das Ausmaß der Verformung ermittelt.

2. Vorrichtung nach Patentanspruch 1 dadurch gekennzeichnet, daß pro Radumdrehung ein Impuls (I) abgegeben wird.

3. Vorrichtung nach Patentanspruch 2, dadurch gekennzeichnet, daß die Anzahl der Impulse (I) über die Betriebsdauer des Reifens erfaßt wird.

4. Vorrichtung nach einem der Patentansprüche 1 bis 3 dadurch gekennzeichnet, daß der Sensor (PE) an oder in einer Zone des Reifens angebracht ist, die bei einem Latschdurchlauf verformt wird.

5. Vorrichtung nach einem der Patentansprüche 1 bis 4, dadurch gekennzeichnet, daß der Sensor (PE) ein Piezoelement ist.

6. Vorrichtung nach einem der Patentansprüche 1 bis 5, dadurch gekennzeichnet, daß die Auswerteeinheit ortsfest im Kraftfahrzeug verbaut ist und der Impuls (I) drahtlos an die Auswerteeinheit übermittelt wird.

7. Vorrichtung nach einem der Patentansprüche 1 bis 6, dadurch gekennzeichnet, daß der Sensor (PE) mit einem Sender (ÜE) zur drahtlosen Übertragung des Impulses (I) verbunden ist.

8. Vorrichtung nach einem der Patentansprüche 6 bis 7, dadurch gekennzeichnet, daß das Piezoelement (PE) zur elektrischen Versorgung des Senders (ÜE) eingesetzt wird.

## Claims

1. A device for the monitoring of the air pressure in a tyre for motor vehicles with a sensor, which delivers a signal corresponding to the deformation of the tyre, and with an evaluation unit, which captures the signal from the sensor, whereby the sensor is constructed in such a manner that it delivers an electrical pulse corresponding to a measure of the deformation of the tyre for one pass of its region of contact with the tyre,
**characterised in that** the evaluation unit determines the measure of the deformation depending on the ratio of the duration (ti₁, ti₂, tiₙ) of the pulse (I) to the duration (tᵤ) of a revolution of the wheel.

2. A device according to Claim 1, **characterised in that** one pulse (I) is delivered per revolution of the wheel.

3. A device according to Claim 2, **characterised in that** the number of the pulses (I) is captured over the operating life of the tyre.

4. A device according to one of the Claims 1 to 3, **characterised in that** the sensor (PE) is applied on or in a zone of the tyre, which is deformed during a pass of its region of contact with the tyre.

5. A device according to one of the Claims 1 to 4, **characterised in that** the sensor (PE) is a piezo element.

6. A device according to one of the Claims 1 to 5, **characterised in that** the evaluation unit is built into the motor vehicle in a fixed position and the pulse (I) is transmitted without wires to the evaluation unit.

7. A device according to one of the Claims 1 to 6, **characterised in that** the sensor (PE) is connected to a transmitter (ÜE) for the wireless transmission of the pulse (I).

8. A device according to one of the Claims 6 to 7, **characterised in that** the piezo element (PE) is utilised for the electrical supply to the transmitter (ÜE).

## Revendications

1. Dispositif de surveillance de la pression d'un pneumatique de véhicule automobile, comprenant un capteur fournissant un signal correspondant à la déformation du pneumatique et une unité d'exploitation recevant le signal du capteur ; le capteur étant réalisé pour émettre une impulsion électrique correspondant au degré de déformation d'un pneumatique au passage de l'aplatissement,
caractérisé en ce que
l'unité d'exploitation détermine le degré de déformation en fonction du rapport de la durée (ti₁, ti₂, ...., tiₙ) de l'impulsion (I) et de la durée (tu) d'une rotation de roue.

2. Dispositif selon la revendication 1,
caractérisé en ce qu'
une impulsion (I) est émise pour chaque rotation de roue.

3. Dispositif selon la revendication 2,
caractérisé en ce que
le nombre des impulsions est détecté pendant la durée de fonctionnement du pneumatique.

4. Dispositif selon l'une des revendications 1 à 3,
caractérisé en ce que
le capteur (PE) est monté sur ou dans une zone du pneumatique qui se déforme au cours du passage de l'aplatissement.

5. Dispositif selon l'une des revendications 1 à 4,
caractérisé en ce que
le capteur (PE) est un élément piézo-électrique.

6. Dispositif selon l'une des revendications 1 à 5,
caractérisé en ce que
l'unité d'exploitation est montée à un emplacement fixe du véhicule et l'impulsion (I) est transmise à l'unité d'exploitation par une liaison sans fil.

7. Dispositif selon l'une des revendications 1 à 6,
caractérisé en ce que
le capteur (PE) est relié à un émetteur (UE) pour la transmission sans fil de l'impulsion (I).

8. Dispositif selon l'une des revendications 6 à 7,
caractérisé en ce que
l'élément piézo-électrique (PE) assure l'alimentation électrique de l'émetteur (UE).
